# EUROPÄISCHE PATENTANMELDUNG

(11) **EP 4 477 471 A1**
(43) Veröffentlichungstag der Anmeldung: **18.12.2024**
(21) Anmeldenummer: 24179863.6
(22) Anmeldetag: 04.06.2024
(51) Int. Cl.: B60R 9/10, B62H 3/08

(54) **FAHRRADHALTER**

(30) Priorität: 16.06.2023 DE 102023115890
(71) Anmelder: Münter Mobilien GmbH, 32052 Herford (DE)
(72) Erfinder: Münter, Jobst Friedrich, 32052 Herford (DE)
(74) Vertreter: Beckord & Niedlich Patentanwälte PartG mbB

(57) **Zusammenfassung**

Die Erfindung betrifft einen Fahrradhalter (1) für zumindest ein Fahrrad (F1, F2) mit einem Vorderrad mit einem Vorderreifen (F_{V}) und einem Hinterrad mit einem Hinterreifen (F_{H}), wobei der Fahrradhalter (1) mindestens folgende Komponenten umfasst: Zum einen umfasst er eine Unterkonstruktion (2) zur Befestigung des Fahrradhalters (1) an einer Basisfläche (M_{B}), vorzugsweise einem Fahrzeugboden (M_{B}) eines Fahrzeugs (M), mit zumindest zwei sich in einer Querrichtung (QR) erstreckenden Querträgern (3), die jeweils zumindest ein, vorzugsweise zumindest zwei, Kopplungsmittel (4, 5, 6) aufweisen. Zum anderen umfasst er eine auf der Unterkonstruktion (2) aufliegende Oberkonstruktion (12), mit zumindest zwei zueinander parallelen, sich in einer Längsrichtung (LR) senkrecht zur Querrichtung (QR) erstreckenden Längsträgern (13), welche mithilfe von lösbaren Verbindungsmitteln (20, 21, 22) an voneinander beabstandeten Positionen (P) an die Querträger (3) der Unterkonstruktion (2) gekoppelt sind. Dabei sind zum Halten eines Fahrrads (F1, F2) jeweils zwei Längsträger (13) so in einem definierten Soll-Klemmabstand (a1, a2) zueinander, in Abhängigkeit einer definierten Reifenbreite (F_{B}) der Reifen (F_{V}, F_{H}) des zu haltenden Fahrrads (F1, F2) einstellbar, angeordnet, dass sie nach einem bestimmungsgemäßen Einsetzen des Fahrrads (F1, F2) zwischen die beiden Längsträger (13) das Fahrrad (F1, F2) an beiden Reifen (F_{V}, F_{H}) gleichzeitig, beidseitig aus axialer Richtung (QR) stützen, wobei eine Höhe (13h) der Längsträger (13) so gewählt ist, dass die Längsträger (13) das zu haltende Fahrrad (F1, F2) seitlich an den Reifenflanken der beiden Reifen (F_{V}, F_{H}) jeweils zumindest in einem Abstützbereich zwischen sich festklemmen, welcher sich von einem ersten Abstand (hf) von der Basisfläche (M_{B}) bis zu einem zweiten Abstand (h) von der Basisfläche (M_{B}) erstreckt. Weiterhin betrifft die Erfindung die Verwendung eines solchen Fahrradhalters (1) sowie ein Verfahren zum Halten eines Fahrrads (F1, F2).

## Beschreibung

Die Erfindung betrifft einen Fahrradhalter für zumindest ein Fahrrad mit einem Vorderrad und einem Hinterrad, ein Set umfassend einen Fahrradhalter und eine Abstandslehre, die Verwendung eines Fahrradhalters zum Halten eines Fahrrads und ein Verfahren zum Halten eines Fahrrads.

Fahrradhalter gibt es in verschiedenen Varianten für verschiedene Zwecke. So gibt es Fahrradhalter für Zuhause zum platzsparenden Anordnen des Fahrrads, z. B. an einer Zimmerwand oder Decke als auch für unterwegs bis zu einem Einsatzort, d. h. um das Fahrrad sicher von A nach B zu transportieren und dort dann z. B. eine Fahrradtour zu unternehmen. Für den Transport eines Fahrrads mit einem Fahrzeug gibt es je nach Fahrzeugtyp und - größe ebenfalls verschiedene Fahrradhalter, nämlich solche zur Installation außen am Fahrzeug, wie z. B. am Kofferraumdeckel, an einer Anhängerkupplung sowie auf dem Dach an einem Dachgepäckträger, sowie solche zur Installation im Fahrzeuginnenraum, z. B. an einer Bordwand. Zur Installation können dabei am bzw. im Fahrzeug vorhandene Befestigungsmittel genutzt werden, an welche die jeweiligen Fahrradhalter individuell angepasst sind.

Aus der Praxis ist beispielsweise ein Fahrradhalter bekannt, der zwei am Boden verlaufende Längsträger aufweist, in die das Fahrrad als lockere Führung mit seinen Rädern hineingestellt werden kann. Zur Fixierung des Fahrrads weist die Konstruktion eine aufrechtstehende Säule, ggf. mit einem auf Höhe des Oberrohrs waagrecht abstehenden Träger, auf, an die bzw. den das Fahrrad im Bereich des Oberrohrs, Lenkers oder Steuerrohrs angelehnt und mittels Spanngurten oder dergleichen festgespannt werden muss. Dies erfordert entsprechend Zeit.

Es ist daher eine Aufgabe der vorliegenden Erfindung, die Konstruktionen des Stands der Technik zu vereinfachen und einen alternativen Fahrradhalter anzugeben, der eine einfachere und schnellere Montage, d. h. Halterung des Fahrrads im Fahrradhalter, als die aus dem Stand der Technik bekannten Lösungen ermöglicht, und insbesondere insgesamt weniger Platz einnimmt, leichter ist und universeller für verschiedene Fahrzeuge, wie insbesondere Kleinbusse und Kleintransporter, einsetzbar ist und ein hierfür geeignetes Verfahren zum Halten eines Fahrrads anzugeben.

Diese Aufgabe wird durch einen Fahrradhalter nach Patentanspruch 1, ein Set nach Patentanspruch 12, eine Verwendung eines Fahrradhalters nach Patentanspruch 13 und ein Verfahren zum Halten eines Fahrrads nach Patentanspruch 14 gelöst.

Der eingangs genannte Fahrradhalter, nachfolgend auch nur kurz "Halter" genannt, dient zur Stützhalterung zumindest eines aufrecht stehenden (oder gegebenenfalls an einer Wand oder über Kopf hängenden) zumindest zweirädrigen Fahrrads im Halter mit einem montierten Vorderrad mit einem Vorderreifen und Hinterrad mit einem Hinterreifen an einem Bereich der Reifen des Fahrrads. Dabei umfasst der Fahrradhalter zumindest die folgenden Komponenten:
Zum einen umfasst er eine Unterkonstruktion zur Befestigung an einer Basisfläche, vorzugsweise einer Bodenfläche einer beliebigen Immobilie oder Mobilie. Die Basisfläche kann dabei jede Ebene sein, an der die Unterkonstruktion befestigt werden kann, d. h. beispielsweise eine durchgängige Fläche, wie z. B. Boden, Wand, Decke oder auch ein Gestell mit mehreren Streben, wie z. B. ein Heckbasisträger, welcher z. B. hinten an einem Fahrzeug oder dessen Anhängerkupplung befestigt werden kann, oder ein oder mehrere Dachträger.

Besonders bevorzugt kann es sich bei der Bodenfläche um einen (freigeräumten) Fahrzeugboden bzw. eine Ladefläche eines passenden Fahrzeugs handeln. Als ein passendes Fahrzeug kommt jedes Fahrzeug in Frage, in dem der Halter am Fahrzeugboden mit seinen Längs- und Querabmessungen parallel zum Fahrzeugboden befestigt werden kann. Beispielsweise eignet sich dazu besonders gut ein Kleintransporter, Kleinbus, Pickup oder Anhänger. Darin sollten entsprechend zumindest auf einer Fahrzeuglängshälfte je nach Größe des Kleintransporters oder Kleinbusses zumindest teilweise die Rücksitze demontiert, verschoben oder ohnehin nicht vorhanden sein. In jedem Fall kommen all solche Fahrzeuge in Frage, die einen ausreichend großen freigeräumten Ladeinnenraum oder -außenraum haben, um den Halter darin montieren und obendrein ein Fahrrad aufrechtstehend darin anordnen zu können.

Die Unterkonstruktion umfasst, insbesondere zur Installation an einem Fahrzeugboden oder einer anderen Basisfläche, zumindest zwei sich in einer Querrichtung (senkrecht zur Längserstreckung des zu haltenden Fahrrads sowie wie bevorzugt senkrecht zur Fahrtrichtung des Fahrzeugs) erstreckende Querträger, die jeweils zumindest ein, vorzugsweise zumindest zwei, Kopplungsmittel zur Kopplung mit der Basisfläche, insbesondere der Bodenfläche und/oder dem Fahrzeugboden, aufweisen.

Markenunabhängig existieren in den allermeisten größenmäßig in Frage kommenden Kleintransportern und Kleinbussen am bzw. im Fahrzeugboden bereits geeignete Gegen-Kopplungsmittel bzw. Befestigungsmittel, wie z. B. Nutenschienen, einzelne Ösen, Befestigungslöcher mit Innengewinde oder dergleichen, mittels derer die Querträger der Unterkonstruktion mittels der Kopplungsmittel am Fahrzeug befestigt, also z. B. verklemmt, eingehängt oder verschraubt werden können. Diese können entsprechend genutzt werden, d. h. die Kopplungsmittel sind vorzugsweise entsprechend ausgestaltet, um mit diesen fahrzeugseitigen Gegen-Kopplungsmitteln zusammenzuwirken. Grundsätzlich wäre es aber auch möglich, die Kopplungsmittel so auszugestalten, dass sie ohne fahrzeugseitige spezielle Gegen-Kopplungsmittel gehalten werden können, zum Beispiel indem sie zwischen den Seitenwänden des Fahrzeugs festgeklemmt werden können oder dergleichen.

Zum anderen umfasst der Fahrradhalter eine auf der Unterkonstruktion aufliegende Oberkonstruktion, die zumindest zwei zueinander parallele, sich in einer Längsrichtung (parallel zur Längserstreckung eines zu haltenden Fahrrads, also bevorzugt parallel zur Fahrtrichtung des Fahrzeugs, senkrecht zur Querrichtung erstreckende Längsträger. Diese sind mithilfe von lösbaren Verbindungsmitteln an, vorzugsweise möglichst gleichmäßig und besonders bevorzugt aus Stabilitätsgründen nicht zu weit, voneinander beabstandeten Positionen an die Querträger der Unterkonstruktion gekoppelt. Die erwähnte bevorzugte Ausrichtung der Längsträger in Fahrtrichtung kann z. B. vorteilhafter bei einer Beladung von hinten und/oder im Falle einer eventuell erforderlichen Vollbremsung sein. Bei geeigneter Fahrzeugbreite ist aber grundsätzlich auch eine Ausrichtung bzw. Aufstellung quer zur Fahrtrichtung möglich, insbesondere, wenn für solche Situationen noch eine zusätzliche Notfallsicherung der Fahrräder erfolgt (wie später erwähnt).

Handelt es sich bei den Verbindungsmitteln um klemm- oder schraubbare Verbindungsmittel, wie z. B. um Schrauben mit einfachen Muttern oder Flügelmuttern, Sternschrauben etc., sind die Längsträger beispielsweise einfach lösbar an die Querträger festgeklemmt bzw. angeschraubt. Besonders bevorzugte Verbindungsmittel werden weiter unten noch erläutert. Mit "nicht zu weit voneinander beabstandet" ist hier gemeint, dass die Kopplungspunkte bzw. die Anzahl an Kopplungspunkten entlang der Längsträger, an denen diese punktuell mit den Querträgern gekoppelt sind, so gewählt sind, dass ein im Folgenden noch definierter Soll-Klemmabstand zwischen den Längsträgern über die gesamte Länge in Längsrichtung der Längsträger gleichmäßig auch unter entsprechenden Belastungen (z. B. in Kurven während einer Fahrt mit dem Fahrzeug, etc.) dauerhaft gleich gehalten werden kann, ohne, dass sich der Abstand wesentlich und infolgedessen die Stabilität der Halterung des Fahrrads verändern würde. Beispielsweise wird verhindert, dass sich der Abstand genau mittig zwischen zwei Kopplungspunkten ungewollt lastbedingt erweitern oder reduzieren und sich damit das Fahrrad ggf. lockern kann.

Dabei sind zum Halten eines Fahrrads, d. h. im Einsatz bei einem bestimmungsgemäßen Gebrauch des Fahrradhalters, jeweils zwei Längsträger so in einem definierten Soll-Klemmabstand zueinander, in Abhängigkeit einer definierten Reifenbreite der Reifen des zu haltenden Fahrrads einstellbar, angeordnet, dass sie nach einem bestimmungsgemäßen und erfindungsgemäßen Einsetzen des Fahrrads zwischen die beiden Längsträger das Fahrrad an beiden Reifen gleichzeitig, beidseitig aus axialer Richtung, d. h. in Querrichtung (quer zum Längsträger) einfassen bzw. stützen, wobei die Längsträger die Reifen in einer geraden Linie zwischen sich einklemmen. Das Fahrrad wird so in einer senkrecht zur Basisfläche zwischen den beiden Längsträgern stehenden Position gehalten, d. h. bei einer Bodenfläche als Basisfläche (wie bevorzugt) aufrecht. Der Soll-Klemmabstand ist vorzugsweise voreinstellbar bzw. bei der Halterung des Fahrrads dann schon entsprechend auf die definierte Reifenbreite der Reifen des Fahrrads voreingestellt.

Bei einer ersten Variante (mit fest eingestellten Längsträgern) ist der Soll-Klemmabstand beim Einbringen des Fahrrads in die Halterung (zumindest) nach (erstmaliger) vorheriger Voreinstellung bereits zwischen den Längsträgern vorhanden bzw. justiert und bleibt auch beim Einsetzen und Hinausziehen des Fahrrads derart eingestellt.

Bei einer zweiten, alternativen Variante (mit zumindest einem lockerbaren Längsträger) wird der Soll-Klemmabstand ebenfalls voreingestellt. Hierzu umfasst zumindest einer der Längsträger eine Umschaltvorrichtung, um den Längsträger vor dem Einsetzen, also z. B. Hineinstellen, des Fahrrads aus der voreingestellten Halteposition, d. h. dem gewählten Soll-Klemmabstand, in eine erleichterte Einsetzposition umzuschalten. Nach dem Einsetzen wird zumindest der gelockerte Längsträger mittels der Umschaltvorrichtung wieder in die gewählte Halteposition zum Halten des Fahrrads umgeschaltet, so dass zwischen den Längsträgern genau der voreingestellte Soll-Klemmabstand vorliegt und das Fahrrad sicher gehalten wird. Bei der Umschaltvorrichtung kann es sich vorzugsweise um ein Exzenterelement handeln, wie weiter unten noch genauer erläutert wird.

Beim Einsetzen des Fahrrads zwischen die beiden Längsträger kann das Fahrrad einfach von oben mit den Reifen in den Zwischenraum (entspricht in der ersten Variante bereits dem Soll-Klemmabstand, in der zweiten Variante ist der Zwischenraum zumindest etwas größer als der Soll-Klemmabstand) zwischen den voreingestellten Längsträgern hineingeschoben bzw. abgesenkt werden. In diesem steht es dann in der ersten Variante bereits stabil senkrecht zur Basisfläche (bei einer Bodenfläche also aufrecht), bis es zum Lösen einfach wieder nach oben aus dem Fahrradhalter, genauer gesagt dem Zwischenraum zwischen den beiden Längsträgern, herausgehoben wird. In der zweiten Variante steht das Fahrrad erst nach Betätigen bzw. Umschalten der Umschaltvorrichtung stabil senkrecht zur Basisfläche zwischen den Längsträgern, da dann erst beide Längsträger exakt auf den vorab voreingestellten Soll-Klemmabstand beabstandet angeordnet sind, wobei das Fahrrad je nach Ausgestaltung der zweiten Variante in der Einsetzposition auch schon leicht vorgeklemmt werden kann, wie weiter unten noch genauer erläutert wird.

Es wird an dieser Stelle darauf hingewiesen, dass die Richtungsbezeichnungen "oben" und "unten" hierauf die üblichen Richtungen an einem Fahrrad Bezug nehmen, d. h. hinsichtlich des Fahrradrahmens ist der Lenker üblicherweise oben und die Räder unten. Sofern die Basisfläche - wie dies vermutlich meistens der Fall ist - eine Bodenfläche, insbesondere ein Fahrzeugboden bzw. eine Ladefläche, ist, stimmen diese Richtungsbezeichnungen auch mit den üblichen Richtungen im Raum (bezogen auf die Schwerkraft) überein. Sofern die Basisfläche (was grundsätzlich auch möglich wäre) eine Wand oder Decke in einem Raum bildet, wäre also "unten" als näher an der Basisfläche zu sehen und "oben" als weiter von der Basisfläche entfernt.

"Definierter Soll-Klemmabstand" meint hier, dass der Klemmabstand vom Nutzer selbst, vorteilhafterweise vor dem Einbringen bzw. Montieren des zu haltenden Fahrrads im Halter, exakt in Abhängigkeit der betreffenden Norm-Reifenbreite des bzw. der zu klemmenden Reifen (bei vorgegebenem Soll-Reifendruck) voreingestellt wird. Hierzu kann beispielsweise eine im Abstand einstellbare - weiter unten noch genauer beschriebene - Abstandslehre verwendet werden, die vor dem Einsetzen eines Fahrrads mit dem passenden Abstand abgestimmt auf die betreffende Norm-Reifenbreite des Fahrrads zur Voreinstellung des Soll-Klemmabstands an einer beliebigen Stelle in den Spalt zwischen den beiden Längsträgern eingeführt bzw. eingesetzt wird. Zur Abnahme der Reifenbreite kann ein handelsüblicher Messschieber verwendet werden, der dazu mit seinem "Maul" an einer beliebigen Stelle zur Messung der exakten Reifenbreite an den Reifen im unbelasteten (z. B. angehobenen) Zustand angelegt wird. Alternativ kann auch der Wert der Norm-Reifenbreite des betreffenden Reifens an der Reifenflanke abgelesen werden und die Abstandslehre entsprechend des wie später erläutert passend dazu gewählten bzw. ermittelten Soll-Klemmabstands eingestellt oder gewählt werden, denn auf jedem Reifen ist in der Regel die Reifenbreite angegeben, die der betreffende Reifen aufweisen sollte, wenn er mit dem für diesen Reifen vorgegebenen Luftdruck befüllt ist. Geringe Schwankungen der Reifenbreite, die sich bei einer Montage der Reifen auf unterschiedlich breiten Felgen oder durch geringe Abweichungen vom vorgegeben Soll-Luftdruck ergeben können, sind tolerabel. Es hat sich herausgestellt, dass in den meisten Fällen auch dann ein sicherer Halt gewährleistet ist.

Daraufhin wird die Abstandslehre gemäß dem ermittelten Soll-Klemmabstand eingestellt oder die passende Abstandslehre ausgewählt und anschließend einmal durch den gesamten Spalt zwischen den Längsträgern (im noch teilweise gelösten Zustand) geschoben, wobei die Längsträger jeweils auf Höhe der Querträger an den Kopplungspunkten zu den Querträgern in diesem Soll-Klemmabstand derart fest fixiert bzw. arretiert werden, dass sich der Soll-Klemmabstand zumindest bei einer ersten Variante im Einsatz unter normalen Umständen nicht mehr selbstständig verändert.

Auch bei der zweiten Variante wird der Soll-Klemmabstand vom Benutzer voreingestellt. Dabei werden die Längsträger, also der zumindest eine umschaltbare sowie der andere Längsträger in der Halteposition im Abstand auf den gewünschten Soll-Klemmabstand voreingestellt. Die Umschaltvorrichtung kann so ausgebildet sein, dass das Umschalten zwischen der Halteposition und der Einsetzposition mittels Kippen, Drehen oder Verschieben des zumindest einen Längsträgers relativ zum anderen Längsträger und/oder und den Querträgern erfolgt. Mit einem Exzenterelement zumindest als Teil der Umschaltvorrichtung kann beispielsweise der zumindest eine Längsträger gekippt oder gedreht werden.

Vorzugsweise kann der Soll-Klemmabstand so gewählt sein, dass sich die Reifen des Fahrrads bei der Montage im Halter in gerader Stellung exakt parallel zur Längsrichtung der Längsträger bzw. zur Fahrtrichtung mit einem gewissen Druck gegen den Reifendruck und Reibungswiderstand der Reifen an den Kontakt- bzw. Stützflächen der Längsträger von oben in den Spalt zwischen zwei Längsträgern hineindrücken bzw. absenken lassen, jedoch das Fahrrad nicht von alleine aufgrund seines Eigengewichts bei einer Anordnung über dem Spalt in den Spalt hineinrutschen würde. Denn dann könnte das Fahrrad bei einer Fahrt mit dem Fahrzeug z. B. bei einer stärkeren Bodenwelle, wie z. B. einem "Speedbump" (in Deutschland eher unüblich, in anderen Ländern allerdings weit verbreitet) in Folge der aufwärts gerichteten Fliehkraft unter ganz ungünstigen Umständen aus dem Spalt zwischen den zwei Längsträgern "herausspringen" und infolgedessen möglicherweise beschädigt werden oder selbst das Fahrzeug beschädigen oder gar darin befindliche Personen gefährden.

Vorzugsweise ist also der Soll-Klemmabstand immer ein wenig geringer, als die definierte Reifenbreite bzw. Norm-Reifenbreite, so dass der Reifen auf beiden Seiten mit Druck gehalten wird aber nicht so stark eingedrückt wird, dass die Längsträger die Felgen berühren. Vorzugsweise liegt der Soll-Klemmabstand mindestens 1 mm, besonders bevorzugt mindestens 2 mm, unter der definierten Reifenbreite. Maximal liegt der Soll-Klemmabstand bevorzugt höchstens 3 mm, besonders bevorzugt höchstens 4 mm, unter der definierten Reifenbreite. D. h. in Abhängigkeit des Reifendrucks und Reifenprofils kann der Soll-Klemmabstand zwischen 1 und 4 mm unter der definierten Reifenbreite liegen. Ein Benutzer, der den Fahrradhalter in der Regel immer wieder für dasselbe Fahrrad oder zumindest denselben Fahrradtyp mit den gleichen Reifen und richtig eingestelltem Soll-Reifendruck verwendet, kann natürlich durch Ausprobieren für sich einen idealen Soll-Klemmabstand finden.

Erfindungsgemäß ist eine Höhe der Längsträger so gewählt, dass die Längsträger das zu haltende Fahrrad seitlich an den Reifenflanken der beiden Reifen jeweils zumindest in einem Abstützbereich (bei einem senkrecht stehenden Rad also ein "Höhenbereich") zwischen sich festklemmen, welcher sich von einem ersten, basisflächennahen bzw. "unteren" Abstand von der Basisfläche, die in Kontakt mit der Lauffläche des Reifens steht, bis zu einem zweiten, basisflächenfernen bzw. "oberen" Abstand von der Basisfläche erstreckt.

Dabei beträgt vorzugsweise der zweite, basisflächenferne Abstand mindestens 5 cm, bevorzugt mindestens 7 cm, besonders bevorzugt mindestens 8 cm, und ganz besonders mindestens 9 cm oder darüber hinaus, z. B. ca. 10 cm.

Bevorzugt beträgt der erste, basisflächennahe Abstand von der Basisfläche vorzugsweise maximal 3 cm, vorzugsweise maximal 2 cm. Der erste, basisflächennahe Abstand, also der Freiraum unter den Längsträgern, kann dabei im Wesentlichen der Höhe der Unterkonstruktion zuzüglich einer eventuell über die Basisfläche hinausragenden Höhe von in der Basisfläche eingelassenen Befestigungssystemen, Schienensystemen oder dergleichen entsprechen, an denen die Unterkonstruktion bevorzugt befestigt werden kann.

Bei einer besonders bevorzugten Ausgestaltung werden die Reifen ohne Berührung der Felgen in einem Abstützbereich bzw. einer Klemmhöhe von 2 cm bis 10 cm über der Basisfläche bzw. dem Boden zwischen den Längsträgern eingeklemmt.

Wenn der Abstand zwischen Basisfläche und der unteren Längskante der Längsträger kleiner als der Abstand zwischen Basisfläche und der breitesten Stelle des Reifenquerschnitts von der Basisfläche ist, stützen die Längsträger das Fahrrad an den Reifenflanken der beiden Reifen dadurch ab, dass sie am Reifenmantel beidseits der Reifen an sichel- oder bogenförmigen Andruckbereichen andrücken. Die Klemmung erzeugt dabei also Druck auf die Bereiche entlang der Reifenflanken, an denen der Reifen ohne äußeren Druck den maximalen Querschnitt aufweist. Ein solcher Andruckbereich ist ein Kreisabschnitt, der von zwei konzentrischen Kreisbögen und einer Kreissehne begrenzt ist, wie dies später noch anhand einer Figur deutlicher wird. Die Kreisbögen sind durch die Reifenform gegeben, wobei ein äußerer der Kreisbögen auf einem etwas größeren Radius und ein innerer der Kreisbögen auf einem etwas kleineren Radius liegt, als der Radius, an dem der Reifen ohne äußeren Druck seinen maximalen Querschnitt aufweisen würde. Die Kreissehne ist durch die Lage der von der Basisfläche entfernteren (meist oberen) Längskanten des Längsträgers gebildet, d. h. die beiden oberen Enden des bogenförmigen Andruckbereichs liegen jeweils an dieser Längskante des Längsträgers. Der Scheitel des bogenförmigen Andruckbereichs am Reifen liegt dann knapp unterhalb einer am nächsten an der Basisfläche liegenden breitesten Stelle des Reifenquerschnitts. Wäre die zum Reifen weisende untere (zur Basisfläche weisende) Längskante des Längsträgers etwas weiter von der Basisfläche entfernt, als die an der Basisfläche liegende breiteste Stelle des Reifenquerschnitts so würde die Andruckfläche auch zur Basisfläche durch eine Kreissehne beschnitten, und die Andruckfläche würde gegebenenfalls in zwei kürzere teilkreisförmige Flächen geteilt, was die Haftreibung etwas verringern kann. Allerdings würde sich dann der Reifen nach dem Einklemmen zwischen den Längsträgern wieder zwischen Längsträger und Basisfläche etwas ausdehnen, wodurch ein zusätzlicher Widerstand gebildet wird, der das Rad zwischen den Längsträgern hält.

Mit dieser Klemmweise wird das Fahrrad in beiden Fällen effektiv gegen Kippen beim Transport im Fahrradhalter gesichert, ohne dass die Felgen tangiert werden.

Die minimalistische, auf die wesentlichen Punkte beschränkte Ausgestaltung des erfindungsgemäßen Fahrradhalters gemäß der ersten der beiden weiter oben erwähnten Varianten ermöglicht so eine stand- und transportsichere Fixierung eines Fahrrads in einem geeignet großen Fahrzeug, die ohne Befestigungsmittel am Fahrradrahmen auskommt. Mit dieser kann ein Fahrrad im üblichen Straßenverkehr stabil, aufrecht und kippsicher in einem solchen Fahrzeug transportiert werden, wobei das Fahrrad besonders schnell und unkompliziert durch einfaches Hineinstellen in den Fahrradhalter ohne die übliche Arretierung des Fahrrads an mehreren Stellen transportsicher montiert und durch einfaches Hinausheben aus dem Fahrradhalter ebenso einfach wieder demontiert werden kann. Diese Variante ist besonders vorteilhaft, wenn der Fahrradhalter über Kopf an einer Decke oder an einer Wand als Basisfläche installiert ist, da die Klemmung beim Einschieben automatisch erfolgt.

Die zweite der beiden oben erwähnten Varianten hat, je nach Ausgestaltung, insbesondere den Vorteil, dass das Fahrrad ohne Reibungswiderstand an den Reifen in den Fahrradhalter eingesetzt werden kann. Auch diese Variante sorgt für eine stand- und transportsichere Fixierung eines Fahrrads ohne Befestigungsmittel am Fahrradrahmen.

Die Erfindung ist somit vorteilhafterweise insbesondere geeignet für eine private oder gewerbliche Nutzung, bei der es jeweils besonders darauf ankommt, dass das Fahrrad schnell und einfach montiert bzw. demontiert ist.

Ein erfindungsgemäßes Verfahren zum Halten eines Fahrrads mit einem Vorderrad mit einem Vorderreifen und mit einem Hinterrad mit einem Hinterreifen umfasst zum Aufbau eines Fahrradhalters auf einer Basisfläche, insbesondere Bodenfläche, vorzugsweise einem Fahrzeugboden eines Fahrzeugs, zumindest die folgenden Verfahrensschritte:
In einem ersten Schritt wird eine Unterkonstruktion des Fahrradhalters auf der Bodenfläche aufgebaut. Dabei werden zumindest zwei sich in einer Querrichtung erstreckende Querträger mithilfe von zumindest einem, bevorzugt zumindest zwei, Kopplungsmitteln an die Bodenfläche gekoppelt.

In einem zweiten Schritt wird eine Oberkonstruktion mit der Unterkonstruktion gekoppelt. Dabei werden zumindest zwei zueinander parallele, sich in einer Längsrichtung senkrecht zur Querrichtung erstreckende Längsträger auf die Unterkonstruktion aufgelegt und mithilfe von lösbaren Verbindungsmitteln an voneinander beabstandeten Positionen an die Querträger der Unterkonstruktion gekoppelt. Dabei wiederum wird zwischen zumindest zwei Längsträgern ein definierter Soll-Klemmabstand wie zuvor erläutert in Abhängigkeit einer definierten Reifenbreite der Reifen des zu haltenden Fahrrads voreingestellt. In diesem Zustand ist der Fahrradhalter bereit zum Halten eines Fahrrads.

Es wird ausdrücklich darauf hingewiesen, dass der zweite Schritt auch vor dem ersten Schritt erfolgen kann, das heißt, dass zunächst - z. B. außerhalb des Fahrzeugs - die Oberkonstruktion mit der Unterkonstruktion gekoppelt wird und dann erst die Kopplung der Unterkonstruktion mit der Bodenfläche erfolgt, um den Fahrradhalter an der Bodenfläche zu befestigen.

Ein erfindungsgemäßes Set umfasst hierfür einen erfindungsgemäßen Fahrradhalter und zumindest eine Abstandslehre zum Einstellen eines definierten Soll-Klemmabstands zwischen zwei Längsträgern des Fahrradhalters. Bei der Abstandslehre kann es sich um eine verstellbare Abstandslehre oder eine Anzahl von feststehenden, auswählbaren Lehren handeln. Die Abstandslehre wird zum Einstellen des definierten Soll-Klemmabstands einfach zwischen die Längsträger gehalten oder ist als Variante mit ihnen verbunden und die Längsträger werden dann an den erwähnten Positionen an die Querträger festgekoppelt.

Zum Einsetzen des zu haltenden Fahrrads wird dann das zu haltende Fahrrad aufrecht mit den Reifen zwischen die beiden passend positionierten Längsträger eingesetzt, d. h. von oben (also in der Regel in etwa senkrecht zur Basisfläche) einfach abgesenkt oder hineingeschoben bzw. hineingedrückt, so dass es durch die Längsträger an beiden Reifen gleichzeitig, beidseitig aus axialer Richtung seitlich an den Mänteln der beiden Reifen radial innerhalb einer mit der Basisfläche bzw. Bodenfläche in Kontakt stehenden Lauffläche bis hin zu der oben genannten Höhe eingefasst und gestützt wird. Da es sich bei der Basisfläche in den meisten Fällen um eine Bodenfläche, vorzugsweise einen Fahrzeugboden bzw. eine Ladefläche, handelt, wird im Folgenden auch der Begriff "Bodenfläche" synonym zu "Basisfläche" verwendet, ohne dass die Erfindung darauf beschränkt sein soll, sofern nicht anders erwähnt.

Bei der ebenfalls möglichen zweiten Variante kann auch zumindest einer der Längsträger über ein zwischen zwei einstellbaren Stellungen stellbares Stellelement quer verschiebbar mit dem Querträger verbunden sein, sodass der Längsträger mithilfe dieses Stellelements in die passende Halteposition im Soll-Klemmabstand zum anderen Längsträger bewegt und darin fixiert werden kann. Ein solches Stellelement kann zum Beispiel eine zwischen zwei Einstellungen verstellbare Spindel, eine Mikrometerschraube, ein Spannriegel/-hebel, Exzenterelement oder dergleichen sein, wobei dann bei der Konstruktion vorzugsweise darauf geachtet wird, dass mithilfe der Spindel immer eine saubere parallele Verstellung des Längsträgers an den Querträgern erfolgt, und die Längsträger nicht verkanten. Grundsätzlich wäre ein solches Stellelement auch an beiden Längsträgern möglich. Gegenüber einem stufenlos verstellbaren Stellelement oder dergleichen hat dies den Vorteil, dass die Verstellung erheblich schneller, einfacher und zugleich sicherer erfolgt, da sichergestellt ist, dass die Reifen nur gemäß dem gewünschten Soll-Klemmabstand (maximale Klemmung) geklemmt werden.

Durch die Verwendung eines erfindungsgemäßen Fahrradhalters gemäß der oben beschriebenen ersten Variante lässt sich somit ein Fahrrad, nachdem der Fahrradhalter erstmalig aufgebaut wurde, platzsparend stehend ohne Montageschritte, d. h. es müssen keine Gurte festgelegt, Klemmen arretiert und/oder Schrauben angezogen werden auf einer Basisfläche bzw. Bodenfläche, vorzugsweise einem Fahrzeugboden eines Fahrzeugs, ausreichend sicher und stabil anordnen. Aber auch bei der zweiten Variante muss als einziger Montageschritt zum Einsetzen des Fahrrads in den Halter nur die Umschaltvorrichtung in die Einsetzposition und nach dem Einsetzen wieder in die Halteposition geschaltet werden, um die Längsträger mit den Reifen des eingesetzten Fahrrads dazwischen in den Soll-Klemmabstand zueinander zu bringen.

Dies schließt aber nicht aus, dass - zum Beispiel für den Fall eines Unfalls des Transportfahrzeugs - das Fahrrad auch zusätzlich durch eine Notfallsicherung, zum Beispiel durch ein im oberen Bereich des Fahrzeugs befestigtes einfaches Sicherungsseil, ein Sicherungsdraht oder dergleichen, gesichert wird. Eine solche eher lockere zusätzliche Sicherung dient aber nicht dazu, das Fahrrad während des normalen Transports in seiner Position zu halten. Daher ist auch keine aufwändige Fixierung oder Einstellung einer solchen Sicherung notwendig. Sofern der Fahrgastbereich gegenüber dem Bereich, in dem das Fahrrad transportiert wird, ausreichend gesichert wird, z. B. wenn dieser Bereich allseits umschlossen ist, ist auch im Falle eines Unfalls keine zusätzliche Sicherung erforderlich.

Auch wenn der erfindungsgemäße Fahrradhalter wie oben erwähnt für eine mobile Anwendung in einem Fahrzeug besondere Vorteile hat, könnte der Fahrradhalter grundsätzlich aber auch für stationäre Anwendungen genutzt werden, z. B. in Fahrradläden, im Fahrradverleih, im Fahrradkeller, an Fahrradparkplätzen/-häusern. In der stationären Anwendung bietet das erfindungsgemäße System den Vorteil, dass die Fahrräder senkrecht und kippsicher stehen im Gegensatz zum üblichen Fahrradständer am Fahrrad. Bei einem solchen Fahrradständer steht das Fahrrad schräg und das Vorderrad schlägt ein. Im dem erfindungsgemäßen Fahrradhalter können die Fahrräder dichter und platzsparender stehen. Vorderrad und Hinterrad sind in einer Flucht fixiert. Fahrradreihen können nicht wie eine Reihe Dominosteine umfallen. Zudem bietet der Fahrradhalter die Möglichkeit des Anschließens zur Diebstahlsicherung. Grundsätzlich ließe sich der Fahrradhalter auch wie erwähnt an Wand oder selbst an der Decke einsetzen, da die Reifen wie oben erläutert durch die Klemmung zwischen den Längsträgern sicher gehalten werden. Hierfür eignet sich besonders die oben erwähnte erste Variante, da dort die Reifen des Fahrrads durch den Reibungswiderstand beim Einsetzen von Anfang an (etwas) bis zum Ende (vollständig) gehalten werden.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Vorzugsweise kann die Höhe der Längsträger so gewählt sein, dass die Längsträger im bestimmungsgemäßen Einsatz, d. h. beim Kontakt mit den Reifen eines Fahrrads, höchstens bis zu einer Höhe einer Ebene unterhalb des Antriebssystems, des Bremssystems, der Schutzbleche, Stütze etc. mit den Reifenflanken der Mäntel der Reifen seitlich in Kontakt stehen. Seitlich meint in diesem Zusammenhang axialaußenseitig bzw. axial außerhalb der jeweiligen Nabe des jeweiligen Rads des Fahrrads.

Weiter gibt es für die Form der Querträger und Längsträger verschiedene Möglichkeiten.

Beispielsweise können die Querträger einen quadratischen Querschnitt aufweisen.

Vorzugsweise können die Längsträger im Querschnitt rechteckig ausgebildet sein. Beispielsweise könnten sie wie auch die Querträger im Querschnitt quadratisch ausgeführt sein.

Bevorzugt können die Längsträger allerdings eine Flachseite aufweisen. Mit dieser Seite können die Längsträger aufrechtstehend angeordnet sein.

D. h. der Querschnitt kann bevorzugt abgeflacht ausgebildet sein, also eine längere Querschnittsseite und eine im Verhältnis deutlich, nämlich beispielsweise im Verhältnis 1:4, kürzere Querschnittsseite aufweisen. Mit der oben erwähnten Anordnung sind die Längsträger in einer waagrechten Richtung damit sehr schmal. Damit verbleibt außenseitig neben den beiden Längsträgern auf den abgewandten Außenseiten Platz zur Anordnung der Pedale des Fahrrads. Noch wichtiger ist jedoch, dass sie in einer dazu senkrechten, vertikalen Richtung (nach oben) dementsprechend eine größere Fläche bzw. Flachseite aufweisen, die für eine größere Kontakt-, Stütz- bzw. Anlagefläche der Reifen des Fahrrads sorgt und damit das Kippen des Fahrrads verhindert.

Ebenfalls praktisch ist, dass derart im Querschnitt abgeflachte Längsträger gegenüber im Querschnitt quadratischen Längsträgern deutlich an Material, Gewicht und Kosten einsparen, was nicht nur für den Transport des Fahrradhalters zum Nutzer, sondern auch im Gebrauch in einem Fahrzeug vorteilhaft ist, da dadurch u. a. Sprit eingespart werden kann.

Im Fahrradhalter wird das Fahrrad sicher und stabil aufrechtstehend gehalten, da es an beiden mit Luft gefüllten flexiblen Reifen gleichzeitig, beidseitig aus axialer Richtung ausreichend gestützt wird.

Auch für Abmessungen der Längsträger und Querträger gibt es bevorzugte Werte.

Vorzugsweise können die Längsträger von der Unterkante vertikal nach oben bis zur Oberkante eine Höhe von mindestens 4 cm, vorzugsweise mindestens 5 cm, besonders bevorzugt mindestens 6 cm, aufweisen.

Alternativ oder zusätzlich können die Längsträger von der Unterkante vertikal nach oben bis zur Oberkante eine Höhe von höchstens 15 cm, vorzugsweise höchstens 13 cm, besonders bevorzugt höchstens 10 cm, aufweisen.

Vorzugsweise können die Längsträger in Längsrichtung derart dimensioniert sein, dass sie so lang wie ein typischer Radstand eines zu haltenden Fahrrads sind, bevorzugt mindestens 20% länger, z. B. eines Fahrrads für Erwachsene. Ein typischer Radstand (Maß zwischen dem vorderen und dem hinteren Ausfallende) eines Fahrrads für Erwachsene beträgt zwischen 90 und 130 cm. Die Ausfallenden verbinden den Rahmen des Fahrrads mit der jeweiligen Nabenachse. Sie befinden sich an den unteren Enden der Gabelscheiden des Vorderbaus bzw. an den Strebenenden des Hinterbaus des Fahrrads.

Besonders bevorzugt können die Längsträger in Längsrichtung zumindest die Gesamtlänge des zu haltenden Fahrrads aufweisen. Typischerweise beträgt die Gesamtlänge eines Fahrrads für Erwachsene, welche je nach Fahrradtyp, Rahmenart, Rahmengröße und Reifengröße variieren kann, zwischen 150 und 200 cm.

Auch für die Länge der Querträger gibt es ein bevorzugtes Maß. Vorzugsweise können die Querträger eine Länge von mindestens 15 cm, besonders bevorzugt mindestens 30 cm, ganz besonders bevorzugt mindestens 50 cm, aufweisen.

Die maximale Länge der Querträger ist vom zur Verfügung stehenden Platz und der gewünschten Anzahl der nebeneinander im Fahrradhalter zu haltenden Fahrräder abhängig. Bei nur einem Fahrrad reichen schon die genannten 15 cm Querträger, für zehn Fahrräder (dann bei einer Aufstellrichtung quer zur Fahrtrichtung, d. h. mit den Querträgern in Fahrtrichtung) können auch Querträger von 300 cm Länge sinnvoll sein.

Vorzugsweise können die Querträger der Unterkonstruktion in Vertikalrichtung nach oben gemessen eine Höhe von mindestens 1 cm, besonders bevorzugt mindestens 2 cm aufweisen.

Alternativ oder zusätzlich können die Querträger eine Höhe von höchstens 5 cm, besonders bevorzugt höchstens 4 cm aufweisen.

Damit steht für die auf der Unterkonstruktion aufliegende Oberkonstruktion mehr Platz zur Verfügung. D. h. konkret beispielsweise, dass die Längsträger höher sein können, nämlich, dass die Seitenlänge der Flachseite länger ausfallen kann und damit die Längsträger eine längere bzw. größere Kontaktfläche zu den Reifen aufweisen.

Für die weitere Ausgestaltung des Fahrradhalters gibt es verschiedene Möglichkeiten.

Vorzugsweise kann der Fahrradhalter - wie bereits erwähnt - eine Umschaltvorrichtung umfassen, um zumindest einen der Längsträger aus der Halteposition (maximale Klemmung), in welchem sich der Längsträger im voreingestellten Soll-Klemmabstand zum anderen Längsträger befindet, in die erleichterte Einsetzposition mit einem relativ zum anderen Längsträger (bezogen auf die Halteposition) vergrößerten Abstand umzuschalten.

Dies hat den Vorteil, dass sich die Reifen des Fahrrads, je nach Ausgestaltung, mit verringertem oder sogar ganz ohne Reibungswiderstand zwischen die Längsträger einsetzen bzw. einschieben lassen, da zumindest einer der Längsträger beim Umschalten vom anderen Längsträger um einen gewissen Abstands- bzw. Winkelwert beabstandet wird. Bei einem Exzenterelement als Umschaltvorrichtung erfolgt das Umschalten beispielsweise im Zuge eines Verkippens oder Verdrehens eines Exzenterteils des Exzenterelements in eine entspannte/gelockerte bzw. eine gespannte/herangezogene Stellung. Das Fahrrad kann so mit den Reifen einfacher zwischen den gelockerten Längsträger und den statischen Längsträger eingesetzt werden.

Besonders bevorzugt kann bei einer ersten bevorzugten Ausgestaltung der Abstand zwischen der Halteposition und der Einsetzposition dabei gerade so viel vergrößert sein, dass sich die Reifen des Fahrrads ohne spürbaren Reibungswiderstand einsetzen lassen. Ohne spürbaren Reibungswiderstand meint, dass die Reifen erst am Ende des Einsetzvorgangs, wenn die breiteste Stelle des Reifens die basisflächennahe Kante der Längsträger erreicht, eine leichte Klemmung erfahren, die dem Benutzer hilft, die Umschaltvorrichtung zu betätigen, um die Längsträger in einen Soll-Klemmabstand bzw. in eine Halteposition zu bringen.

Bei einer anderen bevorzugten Ausgestaltung der zweiten Variante ist der Abstand in der Einsetzposition enger, wodurch die Reifen des Fahrrads bereits früher, bevor die breiteste Stelle der Reifen die Oberkante der Längsträger passiert hat, vorzugsweise mit zumindest der halben Kraft der Kraft, mit welcher sie in der Halteposition im Soll-Klemmabstand geklemmt werden, geklemmt werden.

Auch in der Einsetzposition können demnach vorteilhafterweise die Reifen noch eine gewisse Restklemmung erfahren, um dem Nutzer z. B. bei einer Wand als Basisfläche das Montieren des Fahrrads im Halter etwas zu erleichtern, da das Fahrrad nach dem Einschieben in den Halter bereits leicht klemmt und damit bereits zumindest teilweise gehalten wird.

Vorzugsweise kann die Umschaltvorrichtung so ausgebildet sein, dass sie sich mit einer Hand oder einem Fuß umschalten, also lösen und wieder spannen bzw. arretieren, lässt.

Vorzugsweise kann der Fahrradhalter zwei Paare von Längsträgern zum parallelen oder antiparallelen (nämlich eines Fahrrads in Fahrtrichtung des Fahrzeugs und eines Fahrrads entgegen der Fahrtrichtung), Halten zweier Fahrräder umfassen. Insbesondere mit den oben beschriebenen Maßen der Querträger können genau zwei solche Längsträgerpaare bzw. Paare von Längsträgern nebeneinander an den Querträgern befestigt werden, wobei zwischen den Paaren ausreichend Platz gelassen werden kann, so dass die Pedale und Lenker der Fahrräder einander nicht in Quere kommen.

Vorzugsweise können die Querträger als Profilschienen, besonders bevorzugt Alu-Profilschienen, d. h. Profilschienen aus Aluminium, ausgebildet sein.

Alternativ oder zusätzlich können die Längsträger als Profilschienen, besonders bevorzugt Alu-Profilschienen, ausgebildet sein. Alu-Profilschienen sind besonders vorteilhaft, da sie sehr leicht sind. Bei einer Länge der Längsträger von 180 cm und einer Länge der Querträger von rund 50 cm wiegt die Gesamtkonstruktion, wenn sowohl Längsträger als auch Querträger aus Alu-Profilschienen bestehen, insgesamt weniger als 15 kg.

Weiter bevorzugt können bei als Profilschienen ausgebildeten Querträgern sowie Längsträgern beide jeweils mindestens eine Kulissennut, vorzugsweise zumindest auf den zueinander weisenden Berührungsflächen bzw. Flächen, aufweisen. Kulissennuten erlauben eine beliebige relative Befestigung der Profilschienen aneinander entlang der Kulissennuten. Sie ermöglichen damit eine Verwendung in Fahrzeugen mit unterschiedlichen Befestigungsmitteln an unterschiedlichen Stellen am Fahrzeugboden oder an sonstigen Basisflächen.

Auch für die Ausgestaltung der Unter- und Oberkonstruktion zur Befestigung aneinander gibt es verschiedene Möglichkeiten.

Noch weiter bevorzugt können sowohl die Querträger als auch die Längsträger in sämtlichen parallel zu einer Längsrichtung längsverlaufenden Flächen jeweils zumindest eine längsverlaufende Kulissennut aufweisen, in die sich jeweils Kulissensteine zur relativen Positionierung und Befestigung der längs- mit den querverlaufenden Profilschienen einführen lassen. Die längsverlaufende Kulissennut kann beispielsweise in Form einer T-nutenförmigen Aussparung ausgebildet sein. In dieser T-nutenförmigen Aussparung kann ein Kulissenstein in der Tiefe der Nut mit einer Breite entsprechend des kurzen "T"-Balkens verwendet werden.

Vorzugsweise können die Querträger der Unterkonstruktion in einer Querrichtung exakt senkrecht zu einer Längsrichtung der Längsträger der Oberkonstruktion angeordnet sein.

Dies ermöglicht beispielsweise, dass die Längsträger beliebig entlang der Quererstreckung der Querträger verschoben, angeordnet und befestigt werden können.

Beispielsweise können die Längsträger mittels Winkelelementen an einer frei wählbaren Position entlang der Querträger an den Querträgern befestigt werden. Dazu können die Winkelelemente an einer Kante an den Längsträgern befestigt, z. B. angeschraubt, werden und an einer im rechten Winkel dazu stehenden Kante einen Kulissenstein umfassen. Der Kulissenstein kann vorab in einer der seitlichen Kulissennuten der Querträger eingefädelt werden, so dass dann das Winkelelement an einer gewünschten Position an den Längsträger geschraubt werden kann. Die Winkelelemente können dabei so ausgebildet sein, dass sie sich im halbangezogenen Zustand noch entlang der Kulissennut verschieben lassen und dann zur endgültigen Positionierung an der gewünschten Stelle nur noch wie erwähnt eine Befestigungsschraube in den Längsträger geschraubt werden muss. Natürlich ist auch eine umgekehrte Anordnung der Winkelelemente denkbar, bei der der Kulissenstein in die Kulissennut des Längsträgers gefädelt wird und das Winkelelement im Querträger verschraubt wird. In beiden Varianten lässt sich ein Klemmabstand zwischen zwei Längsträgern zueinander geeignet einstellen, indem die Längsträger an den Querträgern festschraubt bzw. -gezogen werden.

Alternativ oder zusätzlich zur Kopplung mit einem Winkelelement kann zumindest einer der Längsträger als Umschaltvorrichtung zumindest ein Exzenterelement, wie z. B. einen Spannriegel/-hebel, aufweisen.

Für die Befestigung der Querträger an der Basisfläche, insbesondere am Fahrzeugboden, gibt es je nach Basisfläche bzw. Fahrzeug, Fahrzeugboden und dessen Befestigungsmittel unterschiedliche Möglichkeiten. Welche Art von Befestigungsmitteln vorhanden sind, variiert z. B. von Fahrzeughersteller zu Fahrzeughersteller bzw. sogar von Modell zu Modell. In der Regel befinden sich die Befestigungsmittel innerhalb des Fahrzeugs jedoch an vergleichbaren Stellen entlang des Fahrzeugbodens, da sie gemäß ihrer eigentlichen Bestimmung zur Befestigung der hinteren Sitze bzw. Sitzreihen im Fahrzeug in den Fahrzeugboden integriert sind.

Bevorzugt können die Querträger im Einsatz (des Fahrradhalters als Fahrradtransportstützvorrichtung) am Fahrzeugboden mittels verschraubbaren Schraubmitteln als Kopplungsmittel wie erwähnt an geeigneten im Fahrzeug integrierten Gegen-Kopplungsmitteln bzw. Befestigungsmitteln befestigt sein. Bei den Gegen-Kopplungsmitteln kann es sich um Befestigungsmittel an einzelnen oder mehreren voneinander beabstandeten Kopplungspunkten oder gar um durchgängige, längliche Kopplungsschienen handeln, bei denen die Kopplung entlang der Kopplungsschienen beliebig gewählt werden kann.

Besonders bevorzugt kann es sich bei den oben erwähnten Kopplungsmitteln der Querträger um Löcher bzw. Bohrungen, besonders bevorzugt Durchgangslöcher durch die Querträger, handeln, die in den Querträgern ausgebildet sind bzw. sich durch die Querträger hindurch erstrecken. Diese ermöglichen beispielsweise eine Befestigung an der Basisfläche, insbesondere am Fahrzeugboden, mittels Schrauben oder dergleichen, sofern im Fahrzeugboden entsprechende Verankerungs- oder Einschraubmöglichkeiten, wie z. B. Nutenschienen oder an mehreren Stellen im Fahrzeugboden eingebrachte Bohrungen mit eingesetzter Gewindehülse oder vorhandenem Innengewinde, bestehen.

Löcher zur Befestigung der Querträger können beispielsweise auf einer im Einsatz der Basisfläche, insbesondere dem Fahrzeugboden, zugewandten Unterseite oder auf einer der beiden an die Unterseite direkt angrenzenden (senkrecht zur Unterseite vorliegenden) Seiten bzw. Seitenflächen der Querträger ausgebildet sein. Befinden sich die Löcher seitlich, können die Querträger beispielsweise mithilfe von Winkeln, wie z. B. den oben bereits beschriebenen Winkelelementen, in den Befestigungsmitteln bzw. Gegen-Kopplungsmitteln an der Basisfläche bzw. des Fahrzeugbodens im Fahrzeugboden verankert oder verschraubt werden.

Sind die Löcher durchgängig ausgebildet, d. h. handelt es sich um Durchgangslöcher, erstrecken sich diese von der bodenabgewandten Oberseite bis zur bodenzugewandten Unterseite. In diesem Fall ließen sich die Querträger von oben von der Oberseite durch die Querträger hindurch zur Unterseite, beispielsweise mittels einer Gewindestange samt Mutter gegen die Basisfläche, insbesondere den Fahrzeugboden, verschrauben. Es sind aber auch andere Schraubmittel, wie z. B. Schrauben mit Exzenterhebel, denkbar.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
- Figur 1: eine perspektivische Ansicht eines Ausführungsbeispiels eines erfindungsgemäßen Fahrradhalters in einem Fahrzeug mit einem Fahrrad im Fahrradhalter, das in einem von zwei Längsträgerpaaren des Fahrradhalters gehalten wird,
- Figur 2: eine perspektivische Ansicht auf eine Stirnseite des Fahrradhalters aus Figur 1, diesmal ohne Fahrrad,
- Figur 3: eine weitere perspektivische Ansicht auf dieselbe Stirnseite des Fahrradhalters wie in Figur 2, diesmal mit je einem Fahrrad im jeweiligen Längsträgerpaar,
- Figur 4: eine perspektivische Schrägansicht des Fahrradhalters mit zwei Fahrrädern gemäß Figur 3,
- Figur 5: eine perspektivische Ansicht eines zusammengesetzten Winkelverbindungselements sowie der einzelnen Elemente desselben zur Befestigung der Längsträger an den Querträgern,
- Figur 6: eine perspektivische Ansicht eines Befestigungsmittels zur Befestigung der Querträger am Fahrzeugboden,
- Figur 7: einen Querschnitt durch ein Ensemble mit zwei Längsträgern und einem zwischen den Längsträgern gehaltenen Vorderrad oder Hinterrad eines Fahrrads, wobei nur der untere Teil des zwischen den Längsträgern gehaltenen Vorderrads oder Hinterrads eines Fahrrads dargestellt ist und der Schnitt an der tiefsten Stelle des Vorderrads bzw. Hinterrads verläuft,
- Figur 8: einen Längsschnitt durch das Ensemble gemäß Figur 7, entlang der in Figur 7 dargestellten Schnittlinie SQ zwischen dem in Figur 7 rechts dargestellten Längsträger und der rechten Seite des Vorderrads bzw. Hinterrads, wobei nur der untere Teil des Vorderrads bzw. Hinterrads und ein Abschnitt des in Figur 7 linken Längsträgers dargestellt ist.

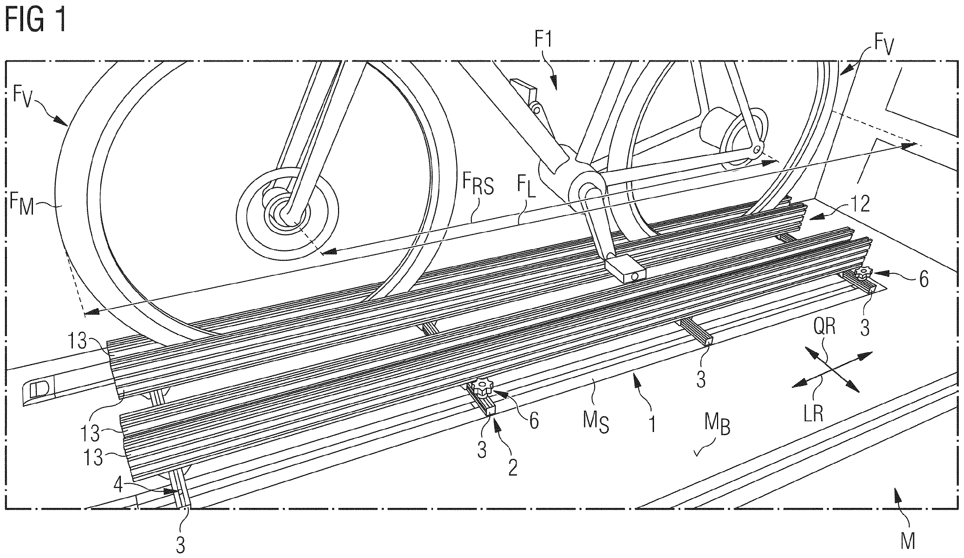

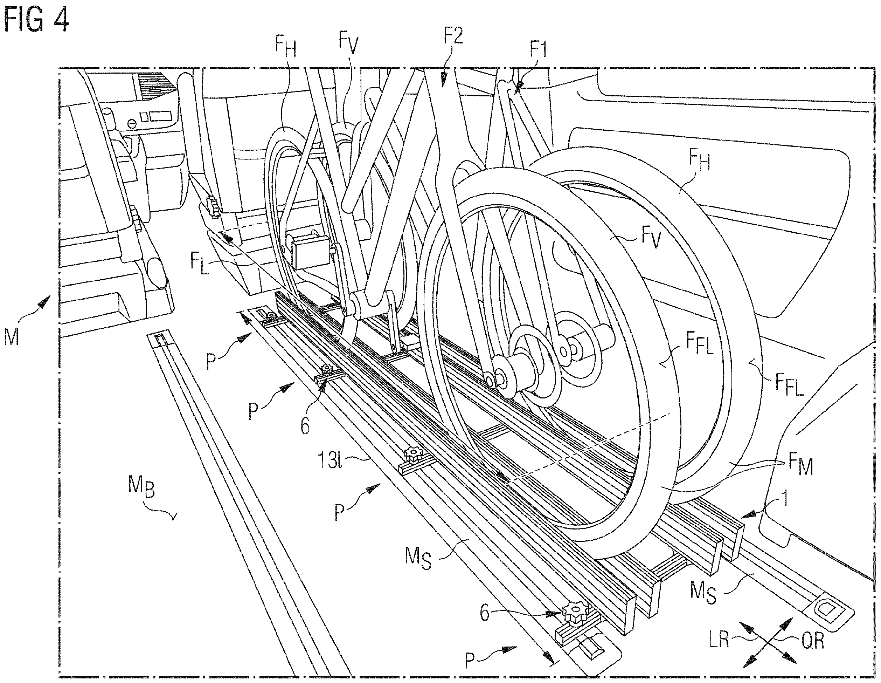

In Figur 1 ist ein Ausführungsbeispiel eines erfindungsgemäßen Fahrradhalters 1 gezeigt, der an einem Fahrzeugboden M_{B} eines Fahrzeugs M, genauer gesagt an Nutenschienen Ms als Befestigungsmitteln Ms des Fahrzeugbodens M_{B}, befestigt ist. In diesem Fahrradhalter 1 wird in Figur 1 gerade ein einzelnes Fahrrad F1 gehalten bzw. gestützt. In Figur 4 werden zwei Fahrräder F1, F2 antiparallel angeordnet gehalten. Bei den Fahrrädern F1, F2 handelt es sich um zwei handelsübliche Erwachsenen-Fahrräder. An dieser Stelle sei darauf hingewiesen, dass mit dem Fahrradhalter 1 grundsätzlich beliebige Fahrräder gehalten werden können, also Fahrräder mit sehr breiten Reifen, wie z. B. Fatbikes, genauso wie Fahrräder mit sehr dünnen Reifen, also z. B. Rennräder. Dafür muss lediglich einmal vorab ein Soll-Klemmabstand a1, a2 bzw. Klemmabstand a1, a2 des Fahrradhalters 1 auf die Reifenbreite F_{B} des jeweiligen Fahrrads F1, F2 eingestellt werden, wie weiter unten noch erläutert wird. Es handelt sich hierbei also um ein Ausführungsbeispiel gemäß der ersten (feststellbaren) der beiden oben erwähnten Varianten, bei dem nach der erstmaligen Voreinstellung zur Montage und Demontage des Fahrrads F1 im Halter das Fahrrad F1 nach dem Einschieben ohne weitere Montageschritte automatisch transportsicher gehalten wird.

Zunächst werden jedoch die Komponenten dieses bevorzugten Ausführungsbeispiels des Fahrradhalters 1 sowie deren Anordnung zueinander näher erläutert.

Zu den Hauptkomponenten des Fahrradhalters 1 gehört zum einen eine Unterkonstruktion 2 umfassend mehrere Querträger 3, hier - wie bevorzugt - als Profilschienen 3 ausgebildet, und eine Mehrzahl von Kopplungsmitteln 6, hier als Schraubmittel 6 ausgebildet. Zum anderen gehört dazu eine Oberkonstruktion 12 umfassend mehrere Längsträger 13, die ebenfalls als Profilschienen 13 ausgebildet sind, sowie Verbindungsmittel 20, 21, 22, hier als Klemmwinkelsatz 20, 21, 22 ausgebildet, um die Querträger 3 winklig (hier rechtwinklig) mit den Längsträgern 13 zu verbinden.

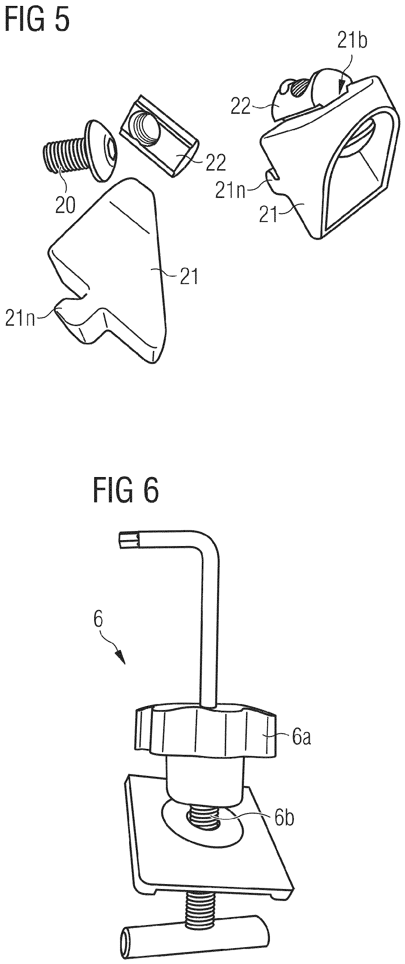

Um die Querträger 3 am Fahrzeugboden M_{B} zu befestigen, weisen sie wiederum am Anfangs- und Endbereich jeweils (theoretisch reicht auch pro Querträger eine mittige Bohrung, wichtig ist aber eine feste Verankerung am Boden) ein durchgängiges Loch 4 auf, über das sie mittels der Schraubmittel 6, bei denen es sich hier z. B. um Sterngriffmuttern 6a und Hammerkopfschrauben 6b handelt (siehe Figur 6), an den Nutenschienen Ms des Fahrzeugbodens M_{B} festgezogen sind.

An dieser Stelle sei kurz auf die weiteren in Figur 6 gezeigten Komponenten eingegangen. Zum einen ist darin eine eckige, hier gummierte Unterlegscheibe gezeigt, die bei der Montage der Querträger 3 an den Nutenschienen Ms im Fahrzeug M mittels Anordnung zwischen Sterngriffmutter 6a und Nutenschiene Ms die Optik der Nutenschiene Ms schont. Zum anderen ist ein Inbusschlüssel gezeigt, der dazu dient den Hammerkopf am Ende der Hammerkopfschraube 6b beim Einführen in eine Nutenschiene Ms passend, nämlich mit dem Hammerkopf parallel zur Längsrichtung der Nutenschiene Ms, auszurichten und der weiterhin dazu dient, den Hammerkopf nach dem Einführen in die Nutenschiene Ms anschließend um 90°, nämlich quer zur Längsrichtung der Nutenschiene Ms, zu drehen, so dass der Hammerkopf dann beim Festziehen an den seitlichen Begrenzungen der Nutenschiene Ms greift.

In diesem fertig montierten Zustand sind die Querträger 3 im Fahrzeug M in einer Querrichtung QR (senkrecht zur Fahrtrichtung des Fahrzeugs M) und die Längsträger 13 in einer Längsrichtung LR, d. h. in Fahrtrichtung senkrecht bzw. quer zur Querrichtung QR angeordnet. Die Längsrichtung LR der Längsträger 13 entspricht einer Längserstreckungsrichtung des Fahrrads F1, F2, die Querrichtung QR einer axialen Richtung des Fahrrads F1, F2.

Bei den Querträgern 3 handelt es sich um längliche Alu-Profilschienen 3, wie z. B. Aluminiumprofile 20x20 Nut 5 I-Typ, die im Querschnitt quadratisch ausgebildet sind. Sie können beispielsweise im Querschnitt eine Seitenlänge von je 20 mm, d. h. eine Höhe 3h und Breite von je 20 mm aufweisen.

Die Längsträger 13 - hier ebenfalls längliche Alu-Profilschienen 13, wie z. B. Aluminiumprofile 20x80 Nut 5 I-Typ - hingegen weisen einen rechteckigen Querschnitt mit einer Flachseite 13f auf, d. h. einen Querschnitt mit einer kürzeren und längeren Querschnittsseite. Die längere Querschnittsseite, welche zugleich die Flachseite 13f ist, steht im Einsatz aufrecht nach oben, d. h. die Längsträger 13 liegen mit der kürzeren Querschnittsseite auf den Querträgern 3 auf. Die Flachseite 13f kann beispielsweise eine Länge bzw. Höhe 13h von 80 mm aufweisen.

Wie bereits erwähnt und in Figur 1 zu sehen ist, sind die Längsträger 13 im rechten Winkel zu den Querträgern 3 angeordnet und mit diesen an jedem Kreuzungspunkt über je zwei Klemmwinkelsätze 20, 21, 22 verbunden. Ein solcher Klemmwinkelsatz 20, 21, 22, welcher in Figur 5 isoliert dargestellt ist, umfasst einen Klemmwinkel 21, eine Schraube 20 und einen Kulissenstein 22. Passend zu diesem Klemmwinkelsatz 20, 21, 22 haben die Längsträger 13 sowie die Querträger 3 auf jeder Seitenfläche eine längs, mittig der Profilschienen 3, 13, verlaufende Kulissennut 5, 15, hier beispielsweise mit einer Öffnungsbreite von 5 mm.

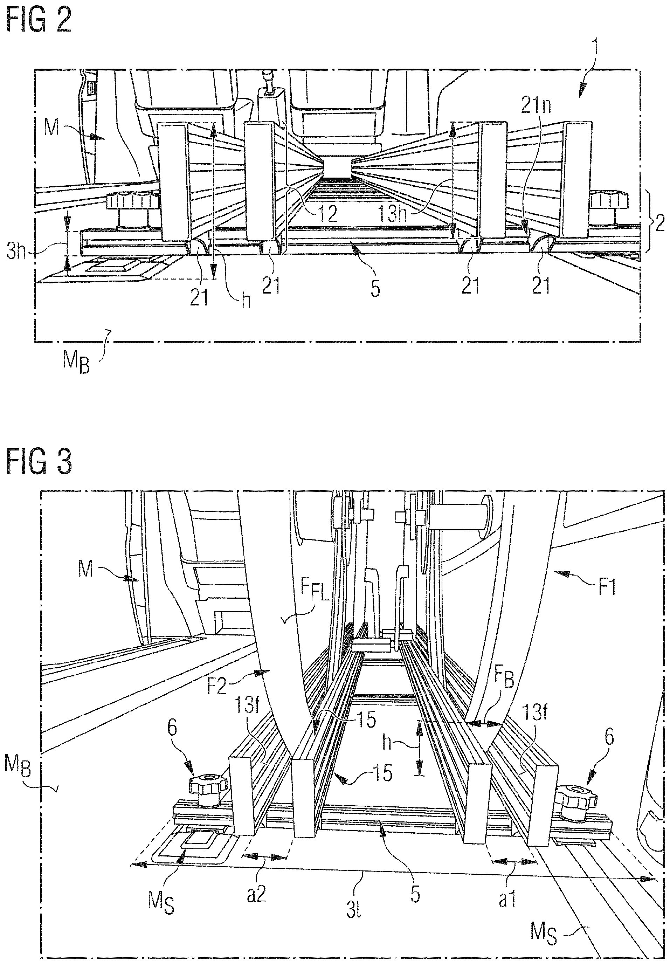

Jeder der Klemmwinkel 21 ist von der Seite betrachtet rechtwinklig und umfasst an einer Kante bzw. Kathete eine gebogen hervorstehende Nase 21n und an einer im rechten Winkel dazu verlaufenden Kante bzw. Kathete eine (normal zu dieser Kante bzw. Kathete stehende) Bohrung 21b (das Gewinde ist bevorzugt im Nutenstein, nicht in der Bohrung). Jeder Klemmwinkel 21 ist jeweils zur beliebig entlang der Querträger 3 positionierbaren Befestigung der Längsträger 13 an den Querträgern 3 in eine seitliche Kulissennut 5 einer vertikal stehenden Seitenfläche des jeweiligen Querträgers 3 eingefädelt, wie beispielsweise in Figur 2 zu sehen ist. Dabei ist der Klemmwinkel 21 so ausgerichtet, dass die Kante mit der Bohrung 21b waagrecht steht und der betreffende Längsträger 13 mit der Kulissennut 15 auf der Bohrung 21b aufliegt.

In die Bohrung 21b ist eine Schraube 20 hineingesteckt, die in einem Kulissenstein 22 mit Gewinde mündet, der innerhalb der Kulissennut 15 sitzt und quer zur Längserstreckung der Kulissennut 15 verdreht ist, so dass er darin geführt und gegen Herausrutschen gesichert ist. Im festgeschraubten Zustand der Schraube 20 in der Bohrung 21b zieht diese den Klemmwinkel 21 von außen und den Kulissenstein 22 von innen gegen die seitlichen Begrenzungen der Kulissennut 22 und damit fest gegeneinander. Der Klemmwinkel zieht dabei durch Anziehen der Schraube beide Aluprofile bzw. Profilschienen/Träger fest aneinander. Die Verschraubung der Längsträger 13 an die Querträger 3 findet bei dem in Figur 1 bereits fest am Fahrzeugboden M_{B} montierten Fahrradhalter 1 vor der Verschraubung am Fahrzeugboden M_{B} praktischerweise außerhalb des Fahrzeugs M im umgedrehten Zustand (d. h. auf dem Kopf liegend) statt, da die Bohrungen 21b der Klemmwinkel hier so angeordnet sind, dass sie im fest am Fahrzeugboden M_{B} montierten Zustand von oben von den Längsträgern 13 verdeckt sind. An dieser Stelle sei allerdings darauf hingewiesen, dass die Klemmwinkel 21 aus praktischen Gründen selbstverständlich auch so mit ihrer Nase 21n in eine der Kulissennuten 5, 15 eingefädelt sein können, dass die Bohrung 21b im Einsatz des Fahrradhalters 1 im Fahrzeug M besser zugänglich ist, beispielsweise so, dass die Bohrung und ein Schraubenkopf einer darin eingesteckten Schraube nach oben zeigen.

Um den bereits erwähnten Klemmabstand a1, a2 (lichter Abstand zwischen einander zugewandten Flachseiten 13f eines Paars von Längsträgern 13 bzw. zweier einander zugeordneter Längsträger 13) gleichmäßig über die gesamte Länge 13l der Längsträger 13 einstellen zu können, verfügt der Fahrradhalter 1 über vier gleichmäßig verteilte Querträger 3 an vier voneinander beabstandeten Positionen P entlang der Längsträger 13. Als Hilfsmittel zur gleichmäßig genauen Einstellung des Klemmabstands a1, a2 zwischen zwei Längsträgern 13 über die gesamte Länge 13l dient eine Mess- bzw. Abstandslehre 30, wie sie in Figur 2 beispielhaft dargestellt ist. Die Abstandslehre 30 hat hier z. B. ein Außenmaß entsprechend dem gewünschten lichten Maß zwischen den Längsträgern 13. Alternativ könnte aber auch eine Abstandslehre verwendet werden, die sich, z. B. durch Gegeneinander-Verdrehen eines Innengewindes gegen ein Außengewinde, in einem gewünschten Außenmaß entsprechend eines gewünschten lichten Maßes einstellen lässt. Grundsätzlich kann also auch ein Messschieber / eine Schieblehre, oder hilfsweise sogar ein Zollstock etc. genutzt werden.

Im Haltezustand stützen so je zwei Längsträger 13 mit ihren beiden zueinander weisenden Flachseiten 13f die Reifen F_{V}, F_{H} eines Fahrrads F1, F2 in einem Klemmabstand a1, a2, der vorab passend zur Reifenbreite F_{B} eingestellt wird, axialaußenseitig ab. Die Flachseiten 13f liegen dabei über ihre volle Höhe 13h, d. h. über einen Abstandsbereich mit einer Höhe von 80 mm an den Flanken der Mäntel F_{M} beider Reifen F_{V}, F_{H} eines Fahrrads F1, F2 gleichzeitig an, was sich in Tests als ausreichende Stützhöhe herausgestellt hat, um ein Fahrrad F1, F2 auch in Kurven sicher und stabil zu stützen.

Die Reifen F_{V}, F_{H}, die zwischen den Längsträgern 13 mit ihrer Lauffläche F_{LF} auf dem Fahrzeugboden M_{B} stehen, werden damit ab einer Unterkante der Längsträger 13, welche in einer Höhe von ca. 2 cm liegt (die Reifen ragen also wie erwähnt zum Boden hin nach unten zwischen den Längsträgern hervor), bis in eine Höhe h von sogar 10 cm über dem Fahrzeugboden M_{B} gestützt gehalten.

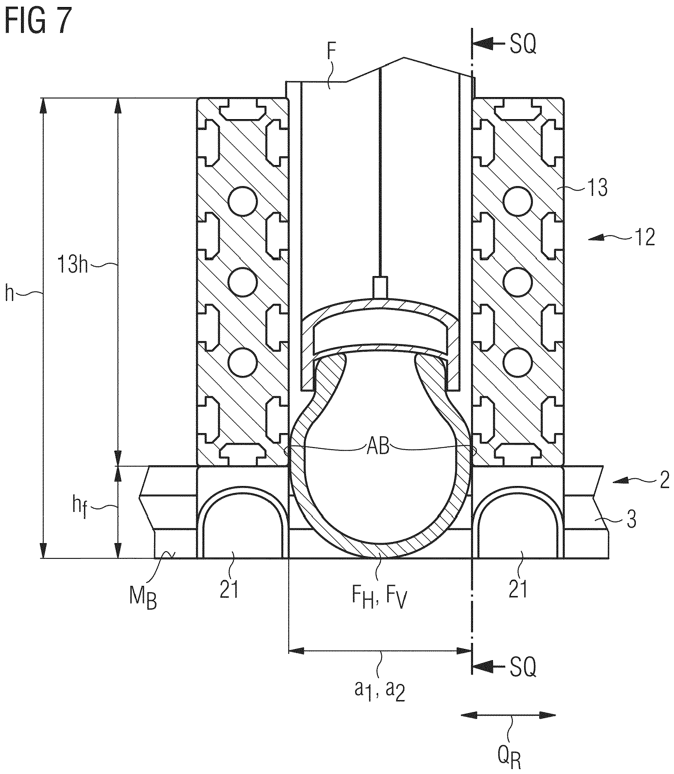

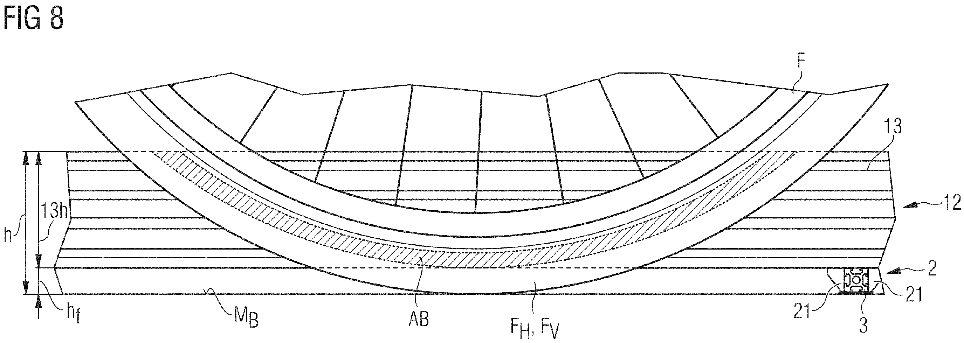

Das Prinzip der Klemmung eines Reifens F_{V}, F_{H} zwischen den Längsträgern 13, ohne dass diese die Felgen F tangieren, wird besonders aus den Figuren 7 und 8 noch einmal deutlich.

Figur 7 zeigt den unteren Teil eines Querschnitts durch ein Vorderrad oder Hinterrad, welches zwischen zwei Längsträgern 13 gehalten wird. Der Schnitt verläuft durch die tiefste Stelle des Reifens F_{V}, F_{H}, d. h. die Stelle, an der der Reifen F_{V}, F_{H} mit seiner Lauffläche F_{LF} auf der Basisfläche (hier dem Fahrzeugboden) M_{B} steht. Figur 8 zeigt dieselbe Anordnung in einem Längsschnitt entlang der in Figur 7 dargestellten Schnittlinie SQ. Dieser Längsschnitt verläuft also zwischen dem in Figur 7 rechts dargestellten Längsträger 13 und dem Reifen F_{V}, F_{H}, so dass in Figur 8 nur ein Abschnitt des in Figur 7 rechten Längsträgers 13 mit dem davor befindlichen unteren Teil des Reifens F_{V}, F_{H} gezeigt ist.

Wie man in den Figuren 7 und 8 deutlich erkennen kann, wird hier der Reifen F_{V}, F_{H}, beidseits an seinen Reifenflanken der Mäntel F_{M} in einem Abstützbereich zwischen den beiden Längsträgern 13 festgeklemmt. Dabei erstreckt sich dieser Abstützbereich über die gesamte Höhe 13h (die Klemmhöhe) der Längsträger 13 von einem ersten Abstand hf von der Basisfläche M_{B} bis zu einem zweiten Abstand h von der Basisfläche M_{B}. Der erste Abstand hf von der Basisfläche bzw. vom Fahrzeugboden M_{B} ist dabei also wie zuvor erwähnt durch die Position der jeweils zum Reifen F_{V}, F_{H} zeigenden unteren Längskante (Unterkante) des Längsträgers 13 bestimmt und der zweite Abstand h von der Position der oberen zum Reifen F_{V}, F_{H}, weisenden oberen Längskante (Oberkante) des Längsträgers 13.

Dabei drücken die Längsträger 13 wie schon erwähnt an den Reifenflanken der Mäntel Fnn jeweils an einem bogenförmigen Andruckbereich AB am Reifen F_{V}, F_{H} an. Ein solcher Andruckbereich AB ist in Figur 8 schraffiert dargestellt. In diesem Bereich AB wird der Reifen F_{V}, F_{H} etwas plattgedrückt und liegt folglich mit Druck an der Oberfläche des jeweiligen Längsträgers 13 an. Hiermit wird eine hohe Haftreibung zwischen Reifenflanken F_{M} und Längsträger 13 entlang des gesamten bogenförmigen Andruckbereichs AB erreicht, was für eine besonders sichere Halterung sorgt.

Die hier gewählten besonders bevorzugten Abmessungen wurden zuvor schon genannt.

Wenn wie hier die Unterkonstruktion 2 so gewählt wird, dass der erste Abstand hf von der Basisfläche M_{B} geringer als der Radius der Reifen F_{V}, F_{H} ist, sollte dafür gesorgt sein, dass auch an der tiefsten Stelle der breiteste Bereich des Reifens F_{V}, F_{H} noch oberhalb der Unterkante des Längsträgers 13 liegt und somit die Klemmung entlang der Reifenflanken Fnn bis zur Oberkante der Längsträger 13 Druck auf den gesamten Bereich ausübt, an dem der der Reifen ohne äußeren Druck den maximalen Querschnitt aufweisen würde. Der dann gebildete Andruckbereich AB lässt sich, wie in Figur 8 zu sehen ist, im Wesentlichen als ein Kreisabschnitt beschreiben, der von zwei konzentrischen Kreisbögen und einer Kreissehne begrenzt ist, wobei die Kreisbögen durch die Reifenform gegeben sind und die Kreissehne durch die (in der Figur) obere Längskante des Längsträgers 13 gebildet wird. Die Breite des Andruckbereichs AB hängt davon ab, wie stark die Längsträger 13 auf den Reifen F_{V}, F_{H} drücken, also vom eingestellten Klemmabstand a1, a2 und der Breite und dem Druck des Reifens F_{V}, F_{H}. Wird bei gleichem Reifendruck der Klemmabstand a1, a2 etwas enger gewählt oder bei identischem Klemmabstand a1, a2 der Reifendruck erhöht, kann der Andruckbereich AB vergrößert werden, was für noch höhere Haftreibung sorgt.

Wenn die Längsträger 13 wie oben dargelegt ausreichend hoch gewählt werden, erstreckt sich dieser Andruckbereich AB auch über einen entsprechend hohen Bereich des Reifens F_{V}, F_{H}, sodass die Längsträger 13 bei einer normalen seitlichen Krafteinwirkung, wie bei einer normalen Kurvenfahrt eines Fahrzeugs, in dem die Fahrräder transportiert werden, die Felgen F der Reifen F_{V}, F_{H} selbst normalerweise nicht tangieren.

Im Unterschied zu aus der Praxis bekannten Konstruktionen kommt der erfindungsgemäße Fahrradhalter 1 damit ohne weitere Befestigung aus, braucht also insbesondere keine aufrechte Säule samt Ausleger, an die das Fahrrad angelehnt und befestigt wird.

Insgesamt verfügt der in den Figuren gezeigte Fahrradhalter 1 über je vier solche Querträger 3 und je vier solche Längsträger 13 (das zweite Paar von Längsträgern 13 dient zum Halten eines zweiten, mit dem Hinterreifen F_{H} in Fahrtrichtung angeordneten Fahrrads F2 - siehe Figur 4). Die Querträger 3 und Längsträger 13 sind jeweils in ihrer Länge passend vorkonfektioniert, so dass sie die passende Größe für ein Erwachsenen-Fahrrad F1, F2 aufweisen und in das Fahrzeug M passen. Nach einer bevorzugten Variante für Erwachsenen-Fahrräder F1, F2 können die Querträger 3 beispielsweise jeweils eine Länge 3l von 45,5 cm und die Längsträger 13 eine Länge 13l von 180 cm aufweisen. Um den Transport zum Nutzer zu erleichtern, können die Längsträger 13 auch aus doppelt so vielen, in der Länge 13l halbierten Abschnitten bestehen, die dann vor Ort durch den Benutzer entsprechend auf Stoß montiert werden, so dass typische Erwachsenen-Fahrräder F1, F2 mit einer Gesamtlänge F_{L} von durchschnittsweise 175 cm und einem Radstand F_{RS} von 90 bis 130 cm problemlos darin gehalten werden können.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. So kann eine Kopplung der Unterkonstruktion mit einer Basisfläche bzw. Bodenfläche und/oder mit der Oberkonstruktion auch auf andere Weise erfolgen, als in dem oben beschriebenen, bevorzugten Ausführungsbeispiel. Beispielsweise kann zumindest ein Teil der Oberkonstruktion über eine Umschaltvorrichtung, wie z. B. ein Exzenterelement, mit der Unterkonstruktion gekoppelt sein, so dass sich ein Soll-Klemmabstand nach vorheriger Voreinstellung schnell aus einer Halteposition in eine Einsetzposition und umgekehrt schalten lässt, d. h. zumindest etwas aus dem Soll-Klemmabstand bringen lässt. Weiterhin sind beispielsweise auch andere Fahrräder wie Kinderfahrräder etc. im Rahmen der Erfindung umfasst. Tatsächlich kann die Erfindung mit allen Arten von Fahrrädern genutzt werden, also mit Fahrrädern mit unterschiedlichen Reifenbreiten, mit Fahrrädern für bestimmte Einsätze (wie Mountainbike, Crossbikes, Rennräder etc.) und - unabhängig davon - mit Fahrrädern, die mit einer Motorisierung bzw. Hilfsmotorisierung ausgestattet sind (wie beispielsweise e-Bikes, Pedelecs etc.). Weiterhin schließt die Verwendung der unbestimmten Artikel "ein" bzw. "eine" nicht aus, dass die betreffenden Merkmale auch mehrfach vorhanden sein können. Ebenso schließen die Begriffe "Element" und "Anordnung" nicht aus, dass die betreffende Komponente aus mehreren zusammenwirkenden Teilkomponenten besteht, die gegebenenfalls auch räumlich verteilt sein können.

### Bezugszeichenliste

- 1: Fahrradhalter
- 2: Unterkonstruktion
- 3: Querträger / Profilschienen
- 3h: Höhe / Breite der Querträger
- 3l: Länge der Querträger
- 4: Löcher, durchgängig
- 5: Kulissennut
- 6: Kopplungsmittel / Schraubmittel
- 6a: Sterngriffmutter
- 6b: Hammerkopfschraube
- 12: Oberkonstruktion
- 13: Längsträger / Profilschienen
- 13f: Flachseite der Längsträger
- 13h: Höhe der Längsträger
- 13l: Länge der Längsträger
- 15: Kulissennut
- 20: Schraube
- 21: Winkelelemente / Klemmwinkel
- 21b: Gewindebohrung
- 21n: Nase
- 22: Kulissenstein
- 30: Abstandslehre
- a1, a2: Klemmabstand
- AB: Andruckbereich
- h: zweiter Abstand von der Basisfläche / Höhe über Fahrzeugboden
- hf: erster Abstand von der Basisfläche / Fahrzeugboden
- F1, F2: Fahrrad
- F: Felge
- F_{B}: Reifenbreite des Fahrrads
- F_{H}: Hinterrad / Hinterreifen
- F_{L}: Gesamtlänge des Fahrrads
- F_{LF}: Lauffläche
- F_{M}: Mantel
- F_{RS}: Radstand
- F_{V}: Vorderrad / Vorderreifen
- LR: Längsrichtung / Fahrtrichtung
- M: Fahrzeug
- M_{B}: Basisfläche / Bodenfläche / Fahrzeugboden
- Ms: Befestigungsmittel / Nutenschienen des Fahrzeugbodens
- P: Positionen
- QR: Querrichtung

## Patentansprüche

1. Fahrradhalter (1) für zumindest ein Fahrrad (F1, F2) mit einem Vorderrad mit einem Vorderreifen (F_{V}) und einem Hinterrad mit einem Hinterreifen (F_{H}), wobei der Fahrradhalter (1) mindestens folgende Komponenten umfasst:
- eine Unterkonstruktion (2) zur Befestigung des Fahrradhalters (1) an einer Basisfläche (M_{B}), vorzugsweise einem Fahrzeugboden (M_{B}) eines Fahrzeugs (M), mit zumindest zwei sich in einer Querrichtung (QR) erstreckenden Querträgern (3), die jeweils zumindest ein, vorzugsweise zumindest zwei, Kopplungsmittel (4, 5, 6) aufweisen,
- eine auf der Unterkonstruktion (2) aufliegende Oberkonstruktion (12), mit zumindest zwei zueinander parallelen, sich in einer Längsrichtung (LR) senkrecht zur Querrichtung (QR) erstreckenden Längsträgern (13), welche mithilfe von lösbaren Verbindungsmitteln (20, 21, 22) an voneinander beabstandeten Positionen (P) an die Querträger (3) der Unterkonstruktion (2) gekoppelt sind,
wobei zum Halten eines Fahrrads (F1, F2) jeweils zwei Längsträger (13) so in einem definierten Soll-Klemmabstand (a1, a2) zueinander, in Abhängigkeit einer definierten Reifenbreite (F_{B}) der Reifen (F_{V}, F_{H}) des zu haltenden Fahrrads (F1, F2) einstellbar, angeordnet sind, dass sie nach einem bestimmungsgemäßen Einsetzen des Fahrrads (F1, F2) zwischen die beiden Längsträger (13) das Fahrrad (F1, F2) an beiden Reifen (F_{V}, F_{H}) gleichzeitig, beidseitig aus axialer Richtung (QR) stützen,
wobei eine Höhe (13h) der Längsträger (13) so gewählt ist, dass die Längsträger (13) das zu haltende Fahrrad (F1, F2) seitlich an den Reifenflanken der beiden Reifen (F_{V}, F_{H}) jeweils zumindest in einem Abstützbereich zwischen sich festklemmen, welcher sich von einem ersten Abstand (hf) von der Basisfläche (M_{B}) bis zu einem zweiten Abstand (h) von der Basisfläche (M_{B}) erstreckt,
wobei vorzugsweise der zweite Abstand (h) mindestens 5 cm, bevorzugt mindestens 7 cm, besonders bevorzugt mindestens 8 cm, ganz besonders bevorzugt mindestens 9 cm, beträgt,
und/oder
wobei vorzugsweise der erste Abstand (hf) von der Basisfläche (M_{B}) maximal 3 cm, vorzugsweise maximal 2 cm, beträgt.

2. Fahrradhalter nach Anspruch 1, wobei die Höhe (13h) der Längsträger (13) so gewählt ist, dass die Längsträger (13) im bestimmungsgemäßen Einsatz höchstens bis zu einer Höhe (h) einer Ebene unterhalb des Antriebssystems, des Bremssystems, der Schutzbleche, Stütze etc. mit den Reifenflanken der Reifen (F_{V}, F_{H}) der Räder seitlich in Kontakt stehen.

3. Fahrradhalter nach Anspruch 1 oder 2, wobei die Längsträger (13) eine Flachseite (13f) aufweisen, mit welcher sie aufrechtstehend angeordnet sind.

4. Fahrradhalter nach einem der vorstehenden Ansprüche, wobei die Längsträger (13) eine Höhe (13h) von mindestens 4 cm, vorzugsweise mindestens 5 cm, besonders bevorzugt mindestens 6 cm, aufweisen
und/oder
wobei die Längsträger (13) eine Höhe (13h) von höchstens 15 cm, vorzugsweise höchstens 13 cm, besonders bevorzugt höchstens 10 cm, aufweisen.

5. Fahrradhalter nach einem der vorstehenden Ansprüche, wobei die Längsträger (13) in Längsrichtung (LR) derart dimensioniert sind, dass sie so lang wie ein Radstand (F_{RS}) eines zu haltenden Fahrrads (F1, F2) sind, bevorzugt mindestens 20% länger sind als der Radstand (F_{RS}), wobei die Längsträger (13) besonders bevorzugt in Längsrichtung (LR) zumindest eine Gesamtlänge (F_{L}) des Fahrrads (F1, F2) aufweisen.

6. Fahrradhalter nach einem der vorstehenden Ansprüche, wobei die Querträger (3) der Unterkonstruktion (2) eine Höhe (3h) von mindestens 1 cm, vorzugsweise mindestens 2 cm, aufweisen
und/oder
wobei die Querträger (3) eine Höhe (3h) von höchstens 5 cm, vorzugsweise höchstens 4 cm aufweisen.

7. Fahrradhalter nach einem der vorstehenden Ansprüche, wobei die Querträger (3) und/oder die Längsträger (13) als Profilschienen (3, 13), vorzugsweise Alu-Profilschienen (3, 13), ausgebildet sind, wobei vorzugsweise bei als Profilschienen (3, 13) ausgebildeten Querträgern (3) und Längsträgern (13) beide jeweils zumindest eine Kulissennut (5, 15), vorzugsweise auf zueinander weisenden Flächen, aufweisen.

8. Fahrradhalter nach Anspruch 7, wobei die Querträger (3) und Längsträger (13) in sämtlichen parallel zu einer Längsrichtung (LR) längsverlaufenden Flächen jeweils zumindest eine längsverlaufende Kulissennut (5, 15) aufweisen, in die sich jeweils Kulissensteine (22) zur relativen Positionierung und Befestigung der längs- mit den querverlaufenden Profilschienen (3, 13) einführen lassen.

9. Fahrradhalter nach einem der vorstehenden Ansprüche, mit einer Umschaltvorrichtung, um zumindest einen der Längsträger (13) aus einer Halteposition, in welchem sich der Längsträger (13) im voreingestellten Soll-Klemmabstand (a1, a2) zum anderen Längsträger (13) befindet, in eine Einsetzposition mit relativ zum anderen Längsträger (13) vergrößerten Abstand umzuschalten.

10. Fahrradhalter nach einem der vorstehenden Ansprüche, umfassend zwei Paare von Längsträgern (13) zum Halten eines Fahrrads (F1) in Fahrtrichtung des Fahrzeugs (M) und zum Halten eines Fahrrads (F2) entgegen der Fahrtrichtung.

11. Fahrradhalter nach einem der vorstehenden Ansprüche, wobei die Querträger (3) am Fahrzeugboden (M_{B}) mittels Schraubmitteln (6) als Kopplungsmittel (6) an im Fahrzeug (M) integrierten Gegen-Kopplungsmitteln (M_{S}) befestigt sind.

12. Set umfassend einen Fahrradhalter (1) nach einem der vorstehenden Ansprüche und zumindest eine Abstandslehre (30) zum Einstellen eines definierten Soll-Klemmabstands (a1, a2) zwischen zwei Längsträgern (13) des Fahrradhalters (1).

13. Verwendung eines Fahrradhalters (1) nach einem der vorstehenden Ansprüche 1 bis 11 zum Halten eines Fahrrads (F1, F2) auf einer Basisfläche (M_{B}), vorzugsweise einem Fahrzeugboden (M_{B}) eines Fahrzeugs (M).

14. Verfahren zum Halten eines Fahrrads (F1, F2) mit einem Vorderrad mit einem Vorderreifen (F_{V}) und einem Hinterrad mit einem Hinterreifen (F_{H}),
a) wobei auf einer Basisfläche (M_{B}), vorzugsweise einem Fahrzeugboden (M_{B}) eines Fahrzeugs (M), mit zumindest den folgenden Verfahrensschritten ein Fahrradhalter (1) aufgebaut wird,
- Aufbauen einer Unterkonstruktion (2) des Fahrradhalters (1) auf der Basisfläche (M_{B}), wobei zumindest zwei sich in einer Querrichtung (QR) erstreckende Querträger (3) mithilfe von zumindest einem, vorzugsweise zumindest zwei, Kopplungsmitteln (4, 5, 6) an die Basisfläche (M_{B}) gekoppelt werden,
- Koppeln einer Oberkonstruktion (12) mit der Unterkonstruktion (2),
wobei zumindest zwei zueinander parallele, sich in einer Längsrichtung (LR) senkrecht zur Querrichtung (QR) erstreckende Längsträger (13) auf die Unterkonstruktion (2) aufgelegt werden und mithilfe von lösbaren Verbindungsmitteln (20, 21, 22) an voneinander beabstandeten Positionen (P) an die Querträger (3) der Unterkonstruktion (2) gekoppelt werden,
wobei zwischen zumindest zwei Längsträgern (13) ein definierter Soll-Klemmabstand (a1, a2) in Abhängigkeit einer definierten Reifenbreite (F_{B}) der Reifen (F_{V}, F_{H}) des zu haltenden Fahrrads (F1, F2) eingestellt wird,
b) wobei dann das zu haltende Fahrrad (F1, F2) aufrecht mit den Reifen (F_{V}, F_{H}) zwischen zwei Längsträger (13) eingesetzt wird, so dass es durch die Längsträger (13) an beiden Reifen (F_{V}, F_{H}) gleichzeitig, beidseitig aus axialer Richtung (QR) gestützt wird und dabei eine Höhe (13h) der Längsträger (13) so gewählt ist, dass die Längsträger (13) das zu haltende Fahrrad (F1, F2) seitlich an den Reifenflanken der beiden Reifen (F_{V}, F_{H}) jeweils zumindest in einem Abstützbereich zwischen sich festklemmen, welcher sich von einem ersten Abstand (hf) von der Basisfläche (M_{B}) bis zu einem zweiten Abstand (h) von der Basisfläche (M_{B}) erstreckt,
wobei vorzugsweise der zweite Abstand (h) mindestens 5 cm, bevorzugt mindestens 7 cm, besonders bevorzugt mindestens 8 cm, ganz besonders bevorzugt mindestens 9 cm, beträgt,
und/oder
wobei vorzugsweise der erste Abstand (hf) von der Basisfläche (M_{B}) maximal 3 cm, vorzugsweise maximal 2 cm, beträgt.
